# EUROPEAN PATENT APPLICATION

(11) **EP 1 220 557 A1**
(43) Date of publication of application: **03.07.2002**
(21) Application number: 00403718.0
(22) Date of filing: 29.12.2000
(51) Int. Cl.: H04Q 7/36

(54) **Communication system and method of sharing a communication resource**

(71) Applicant: MOTOROLA, INC., Schaumburg, IL 60196 (US)
(72) Inventor: Faure, Cécile, 75014 Paris (FR); Calin, Doru, 78990 Elancourt (FR); Lee, Tin Lin, Woodhead Drive, Cambridge EB4 1YZ (GB)
(74) Representative: Litchfield, Laura Marie

(57) **Abstract**

A wireless communication system includes a communication resource with a number of Operators providing communication on the communication resource. A first portion of said communication resource is dedicated to a first Operator and a second portion of said communication resource is dedicated as a shared resource for shared use between at least two Operators within the communication system.

A method of sharing a communication resource is also provided.

This enables the sharing of frequencies, between proprietary and shared frequencies, by dynamically controlling a set of adjustable thresholds for call admission and termination, resulting in flexible spectrum sharing and an increase in spectrum efficiency. Such a mechanism to provide a flexible spectrum allocation is attained by moving thresholds and/or by instruction from a Central Controller

## Description

### Field of the Invention

This invention relates to an efficient method for dynamic inter-Operator communication resource sharing. The invention is applicable to, but not limited to, dynamic sharing of frequencies between different Operators in a CDMA environment.

### Background of the Invention

In the field of this invention it is known that radio resource is both scarce and expensive. Hence, in designing and operating cellular-based systems, spectrum efficiency must be optimised. This is critical, particularly in the current wireless communication climate, where several Operators compete for customers within the same frequency band.

In current communication systems, a number of known spectrum utilisation techniques exist.

One known spectrum allocation technique, is to allocate a fixed amount of spectrum in a particular communication system to each Operator. The Operators are committed to fulfil certain objectives in terms of the amount of traffic they service and the coverage area they provide.

If the Operators do not fulfil these objectives, part of their spectrum may be reallocated to other Operator's in need of such spectrum.

However, this approach has the disadvantage that the assessment of whether the objectives are met, and fixedly re-allocating spectrum if they are not met, takes weeks if not months to implement. Furthermore, the technique is generally accepted as too inflexible to meet its desired purpose. Notwithstanding this, it is also clearly unsuitable if the spectrum usage for particular Operators occurs in peaks and troughs. A more dynamic way of reallocating spectrum according to traffic needs is therefore required.

An alternative technique has been proposed in US 5,907,812 that focuses on utilisation of unused spectrum. US 5,907,812 attempts to optimise spectrum utilisation by providing for flexible coexistence of several radio systems on a common radio frequency band. This involves searching for frequencies that satisfy the interference requirements (in terms of influences from neighbouring Operator frequencies) and the service requirements (in terms of bandwidths required) of the communication system.

This scheme is similar to a "Dynamic Carrier (Spectrum) Assignment (Allocation)" between co-existent and collaborative Operators. In such a scheme, all frequencies are "pooled" and are made available to all Operators, provided they comply with a designated allocation criteria. US 5,907,812 fails to provide any algorithms or indication on how to implement this scheme.

However, the inventors of the present invention have recognised that this approach, at least from DCA experience, has the disadvantage that the procedure is very complex. Furthermore, DCA is outperformed by Fixed Carrier Assignment (FCA) at high load traffic. It is noteworthy that DCA will also be outperformed by the classical FCA technique even at medium load traffic.

Thus, there exists a need in the field of the present invention to provide a communication system and a method of sharing a communication resource wherein the abovementioned disadvantages may be alleviated.

### Statement of Invention

In accordance with the present invention there is provided a wireless communication system, as claimed in claim 1.

In accordance with the present invention there is provided a method of sharing a communication resource, as claimed in claim 20.

### Brief Description of the Drawings

Exemplary embodiments of the present invention will now be described, with reference to the accompanying drawings, in which:

FIG. 1 shows an overview block diagram of a spectrum allocation incorporating frequency sharing between Operators, in accordance with a preferred embodiment of the invention.

FIG. 2 shows the use of noise-rise as a threshold to manage a number of users communicating on frequencies, in accordance with a preferred embodiment of the invention.

FIG. 3 shows a technique of adjusting threshold(s) when proprietary frequencies are not fully loaded in a proprietary and shared frequency carrier system, in accordance with a preferred embodiment of the invention.

FIG. 4 shows a technique the adjustment of threshold(s) when proprietary frequencies are fully loaded, in accordance with a preferred embodiment of the invention.

FIG. 5 shows a flow chart for determining of the threshold(s) of FIG. 3 and/or FIG. 4, in accordance with a preferred embodiment of the invention.

FIG. 6 shows an architecture for dynamic inter-Operator spectrum sharing, in accordance with a preferred embodiment of the invention.

FIG. 7 shows a method of signalling exchange between local and common controllers in an inter-Operator spectrum sharing arrangement, in accordance with a preferred embodiment of the invention.

FIG. 8 shows a flowchart of a Call Admission process in dynamic inter-Operator spectrum sharing arrangement, in accordance with a preferred embodiment of the invention.

FIG. 9 shows a timing diagram of a dynamic priority access in inter-Operator spectrum sharing arrangement, in accordance with a preferred embodiment of the invention.

### Description of Preferred Embodiments

To remove the drawbacks of the prior art dynamic carrier assignment techniques, a tight co-ordination between Operators of any resource is needed. Unfortunately, such co-ordination and co-operation is an extremely complex process!

In summary, the invention enables the feasibility of frequency sharing by dynamically adjusting a set of thresholds, without the need of load information exchange or exchange of any confidential information between the Operators, to optimise spectrum efficiency.

With current spectrum sharing rules, spectrum allocation is performed in a completely rigid manner, namely one Operator is allocated its own portion of spectrum. The cited patent above provides for a dynamic carrier assignment (DCA) concept. The inventors of the present invention have identified a novel HYBRID SHARING mechanism to improve spectrum allocation between Operators.

In particular, a portion of spectrum may be:
(i) allocated to an Operator and remain allocated
(ii) pre-allocated; and/or
(iii) restrictively allocated to an Operator, with a portion of the remaining spectrum being shared with at least one Operator

Furthermore, the inventors envisage "Aposteriori" sharing: from the current spectrum allocation perspective, only a portion of the available spectrum (belonging to an Operator) could be shared. One example of this would be if an Operator holds say, ten GSM (or GPRS/EDGE) carriers, it may decide to share say, three carriers with another Operator(s). This decision to share spectrum may be made after a period of time or the Operator may decide to use its entire spectrum of ten carriers.

The inventors also envisage "Apriori" sharing. The inventors believe that future spectrum allocation, for example in the case of the universal mobile telecommunication system (UMTS), may have reasons to share (differently) from the outset of system roll-out. In such a case, an Operator may acquire, and therefore pay for, say, three UMTS carriers. However, the Operator may not have enough subscribers at the outset to justify (with respect to its own expenses) a utilisation of say, 50% of its spectral resource. It may therefore decide to share one of its three carriers with other Operator(s) for a period of time.

In such a scenario, the Operator would continue to own the licence. Once the subscriber base increases the Operator may decide to maintain, for its own use, all three carriers. Thus, a shared part of the spectrum is still a portion of the spectrum owned by a given Operator.

The inventors further envisage a situation where a Licence of shared spectrum does not necessarily belong to an Operator, as it may belong to an external Operator or to a regulatory Organisation. It is envisaged that the regulatory Organisation may decide itself to dedicate a certain portion of the spectrum, not owned by anyone, for sharing purposes. This is in direct contrast to current spectrum allocation methodology, but the inventors believe that there would be technical benefits to be obtained - analogous to packet switching vis-à-vis circuit switching.

Operators accessing this shared spectrum will pay for the amount of resource they use over a period of time. Moreover, in accordance with the particular pricing rules, they are motivated to use such shared spectrum only once their allocated spectrum is fully used.

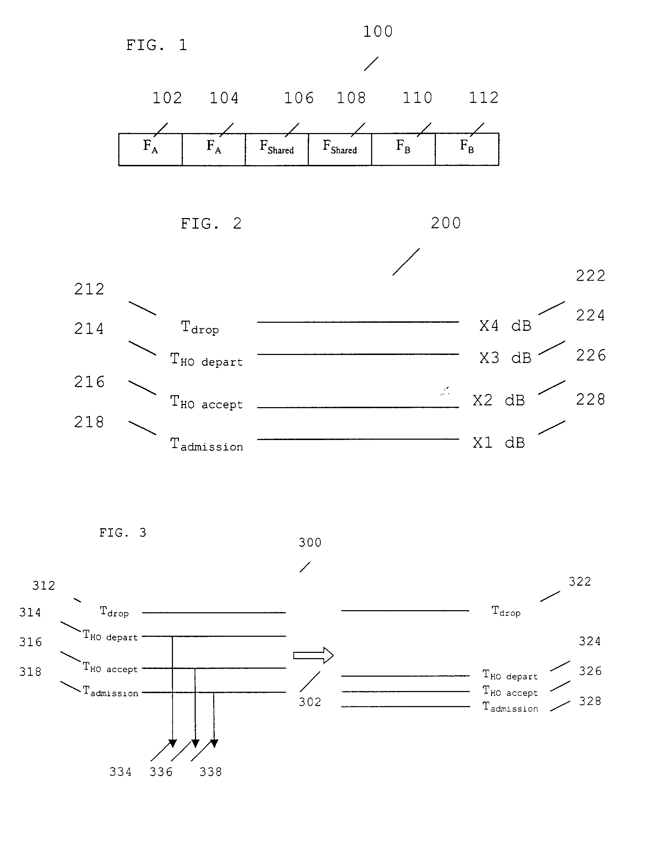

Referring now to FIG. 1, an overview block diagram 100 of spectrum allocation arrangement with frequency sharing is shown, in accordance with a preferred embodiment of the invention.

Frequencies 102-112 are shown as being shared between several Operators to improve spectrum utilisation.

Network A has "proprietary frequencies" F_{A} 102, 104 and network B its own proprietary frequencies F_{B} 110, 112. Only the respective network is able to use their own proprietary frequencies. Two frequencies are shared (designated as F_{Shared} 106, 108) between networks A and B. Mobile users of both networks may therefore be assigned to these shared frequencies, depending on the load conditions on both networks. In this case, each network can potentially use up to four frequencies. Radio resource can therefore be adapted to the traffic needs in the communication system, resulting in improved spectrum utilisation.

This solution may be termed Hybrid Carrier (Spectrum) Assignment (Allocation) between different Operators. The concept is novel as portions of the spectrum are assigned as dedicated/proprietary and other portions are assigned as shared as in the reference example (Dynamic Carrier Assignment).

The inventive concept of the present invention uses the spectrum in a more effective way than prior art arrangements, as:
(i) at light load, only fixed frequencies will be used (no additional load required by co-ordination with other Operators); and
(ii) at medium-high load, shared frequencies start to be used while keeping the utilisation of "fixed" frequencies high.

This method will consequently outperform both Fixed Carried (Spectrum) Assignment (Allocation) and fully Dynamic Carrier (Spectrum) Assignment (Allocation).

To fully exploit the advantages of this scheme, the inventors have recognised that preferably some major principles have to be respected:
(a) The proposed sharing algorithm has to enable dynamic adjustment of any communication resources available to each Operator.
(b) These shared frequencies are used preferably only when all proprietary frequencies are fully loaded.
(c) Priority rules between Operators that share these frequencies should be implemented. This is to provide better load management of these shared frequencies.
(d) Exchange of load or confidential or sensitive information concerning each Operator should be avoided.
   One aspect of the preferred embodiment of the present invention is to propose rules for managing these shared frequencies, bearing in mind the principles mentioned above, by defining:
(i) admission rules of mobile users, either by direct access or hand-over;
(ii) load control rules; and
(iii) priority management rules between Operators allocating the shared frequencies.

Four thresholds are specified, in accordance with these rules in order to manage the load or the number of users on the shared frequencies:
(1) T_{admission}: a new call admission threshold;
(2) T_{HO accept}: hand-over requests admission threshold;
(3) T_{HOdepart}: a hand-over departure threshold; and
(4) T_{drop}: a drop threshold, dictating the disconnection of some mobile users, to ensure that a certain quality of service is maintained.

To clarify (3) and (4), T_{drop} and T_{HOdepart} are differentiated by outage risks, to warrant the best trade-off between outage probability and overall resource utilisation.

Referring now to FIG. 2, the use of noise-rise as a measurement threshold(s) 200 to manage a number of users on frequencies, is shown in accordance with a preferred embodiment of the invention. The use of noise-rise values to define the thresholds is one example of many possible examples of measurement criteria, such as total power transmitted by base station, system outage etc., to manage a number of users on frequencies.

In the noise-rise example of FIG. 2, incoming mobile users are admitted until a noise-rise of X1 dB 228 is reached and T_{admission} threshold 218 is exceeded. Mobile users being handed over from other cells or frequencies are accepted until noise-rise measurement of X2 dB 226 is reached and the T_{HO} accept threshold 216 is exceeded. When a noise-rise measurement reaches X3 dB 224, and THO-depart threshold 214 is exceeded, some mobile users are handed over to other cells or frequencies. Some mobile users are dropped when noise-rise measurements reaches X4 dB 222 and the T_{drop} threshold 212 is exceeded.

In the case of a shared frequency, two sets of these four threshold values are defined:
(i) a "Default threshold set" refers to values of thresholds that are used to prevent the use of the shared frequencies; and
(ii) a "Target threshold set" refers to values of thresholds when shared frequencies are to be used.

In accordance with the preferred embodiment of the invention, each Operator has the freedom to vary the four thresholds used on the shared frequency, provided that they remain within the default and the target thresholds set. The target and default thresholds may be pre-defined or changed dynamically.

Basically, each Operator uses a target set of thresholds that is different from the other Operators. Priority rules are generated automatically based on the relationship between the target thresholds of the Operators. For example, if Operator A uses a T_{drop} threshold of 14dB while Operator B uses a T_{drop} threshold of 20dB, Operator A begins to drop its mobile users before Operator B would start to do so. In this manner, dynamic setting of the priority rules is enabled. Moreover, the cost of using these frequencies can be easily derived by comparing the respective threshold values.

The change of threshold values within the limits of the default and target threshold sets enable distribution and control of the communication load on both the shared and proprietary frequencies. In the preferred embodiment of the present invention, the thresholds are dynamically adjusted, depending on the loading conditions, and are further described with reference to the two cases below.

Referring now to FIG. 3, the first case addresses the situation where proprietary frequencies are not fully loaded 300. The mobile users on the shared frequencies are to be handed-over 302 to the proprietary frequencies in order to make shared frequencies available to the Operators. Admission of mobile users on the shared frequencies is stopped and the hand-over 302 of the users from the shared to the proprietary frequencies has to be favoured.

In this case, the levels for T_{admission} threshold 318, T_{HO_accept} threshold 316, and T_{HO_depart} threshold 314 decrease 338, 336, 334 to respective lower threshold levels 328, 326, 324 on the proprietary frequencies to ensure that a number of users leave the shared frequency. The T_{drop} 312 threshold for the shared frequencies can remain at the same level as the T_{drop} 322 threshold for the proprietary frequencies in order to control the outage on the shared frequency.

In the preferred embodiment of the invention, the adjustment of the thresholds is performed with an appreciation of all communication activity on the system, both on proprietary frequencies and shared frequencies, in order to avoid overloading the proprietary frequencies and avoid overloading the system by performing too many inter-frequency hand-overs. As a consequence, a number of users will leave the shared frequency, either by hand-over or at the end of their call.

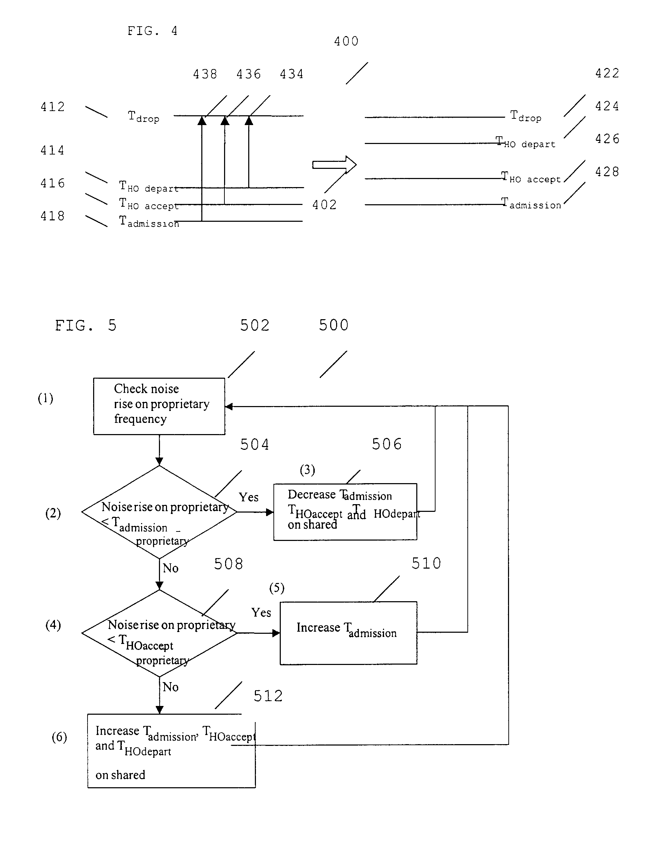

Referring now to FIG. 4, in contrast to the first case, the situation where proprietary frequencies are fully loaded 400 is addressed. In this case the objective is to increase the load on the shared frequencies.

New call requests are to be accepted by, or transferred from 402 the proprietary frequencies, to the shared frequencies. Here, the threshold levels of T_{admission} threshold 418, T_{HOdepart} threshold 414 and T_{HO_accept} threshold 416 are respectively increased 438, 434, 436, when compared to the corresponding threshold levels of the proprietary frequencies 428, 424, 426. Again, the T_{drop} threshold 412 for the proprietary frequencies may remain at the same level as the T_{drop} threshold 422 for the shared frequencies in order to control the outage on the frequency.

Referring now to FIG. 5, a flow chart 500 for determining such threshold values is shown, in accordance with a preferred embodiment of the invention. The flow chart demonstrates the steps to be considered by each Operator when changing the set of threshold values on the shared frequency (between the default and target sets assigned to the Operator).

T_{admission_proprietary} threshold and T_{HO_accept_proprietary} threshold have been selected as the thresholds to use on the proprietary frequency. First, the noise-rise on the proprietary frequency is checked, in step 502 in order to evaluate its loading. The noise-rise on the proprietary frequency is then compared, in step 504, to the T_{admission_proprietary} threshold.

If the noise-rise, in step 504, is less than the T_{admission_proprietary} threshold, the proprietary frequency is not fully loaded and is able to accept resource requests. As a consequence, the respective threshold levels on the shared frequency have to be decreased, as shown in step 506, although maintained within the limits given by the default threshold set and target threshold set. Such a process prevents utilisation of shared spectrum as long as proprietary spectrum remains underused.

If measured noise-rise is higher than the T_{admission_proprietary} threshold in step 504, it is compared to the THO_accept_proprietary threshold, in step 508. If the noise-rise is smaller than the handover T_{HO_accept_proprietary} threshold in step 508, the proprietary frequency is not able to accept new users. However, it can handle users being handed over from other cells. Therefore, the T_{admission_proprietary} threshold has to be increased, as shown in step 510, on the shared frequency in order for new users to be directly allocated a shared frequency.

If the noise-rise is higher than the handover T_{HO_accept_proprietary} threshold, in step 508, the proprietary frequency will not accept any new user as it is fully loaded. In this case all the thresholds on the shared frequency have to be increased, as shown in step 512. After increase or decrease of any of the thresholds in steps 506, 510 or 512, the process returns to step 502 where the noise-rise criteria is checked.

As mentioned earlier, it is within the contemplation of the invention that measurement criteria other than noise-rise may be used in the flowchart of FIG. 5.

The default and target threshold(s) set may be preselected. However, more flexibility is provided when the default and target thresholds are adjusted dynamically. This is made possible, in accordance with the preferred embodiment of the present invention, by the provision of a Central (Common) Controller (CC) to communicate with particular Operators in a given geographical area. The communication to the particular Operators would notify, for example, the use of the shared frequencies by some Operators and/or evaluate the values of thresholds for each of the shared frequencies assigned to the Operators.

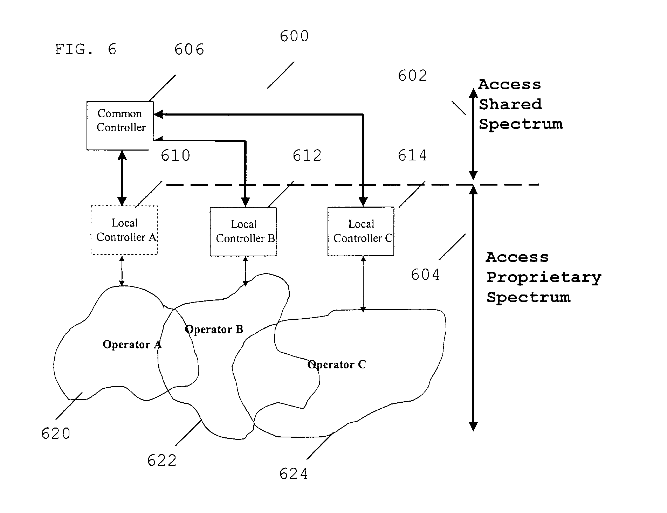

Referring now to FIG. 6, an architecture 600 for dynamic inter-Operator spectrum sharing is shown, in accordance with a preferred embodiment of the invention. The architecture is divided between an access shared spectrum 602 and an access proprietary spectrum 604. Let us assume that three Operators: A 620, B 622 and C 624 have agreed to flexibly share a number frequencies.

In the example, the CC 606 is "hosted" by Operator A 620 and may communicate with the local controller of Operator B 612 and local controller of Operator C 614. Local controller of Operator A 610 is optional since, in this case, the local access to the proprietary spectrum for Operator A may be governed by the CC 606. It is important to note that, in the preferred embodiment of the present invention, communications with CC 606 commences only when the proprietary frequencies of the Operators are fully loaded.

In the preferred embodiment of the present invention, the information exchanged between the CC and the relevant Operators may include:
(i) in Operator (620, 622 or 624) to CC 606 communication: a notification that a proprietary frequency owned by the respective Operator is available for sharing ("FREQUENCY AVAILABLE")
(ii) in CC 606 to all Operators 620, 622, 624 communication: a broadcast that a given frequency is available for sharing ("SHARED SPECTRUM AVAILABLE");
(iii) in Operator (620, 622 or 624) to CC 606 communication: a notification that the respective Operator wishes to use a frequency available for sharing ("SHARED SPECTRUM ACCESS REQUEST");
(iv) in CC 606 to one Operator (620, 622 or 624) communication: a notification that the particular Operator is allowed to use a frequency and details of the target thresholds to be imposed on this frequency ("ACCESS INCREASE");
(v) in CC 606 to one Operator (620, 622 or 624) communication: an update of the target thresholds ("ACCESS INCREASE/DECREASE");
(vi) in Operator (620, 622 or 624) to CC 606 communication: a notification that a frequency the Operator owns is no longer available for sharing ("FREQUENCY NON AVAILABLE");
(vii) in CC 606 to all Operators 620, 622, 624 or a group of Operators communication: a broadcast that a frequency is no longer available for sharing ("ACCESS DECREASE").

In the case where the shared spectrum is no longer available for use by all, an "ACCESS FORBIDDEN" message is preferably sent.

The amount of information to be exchanged is preferably limited. Moreover, such information will be exchanged only in exceptional circumstances, such as system overloading, following variations of traffic due to busy hours or busy days etc.

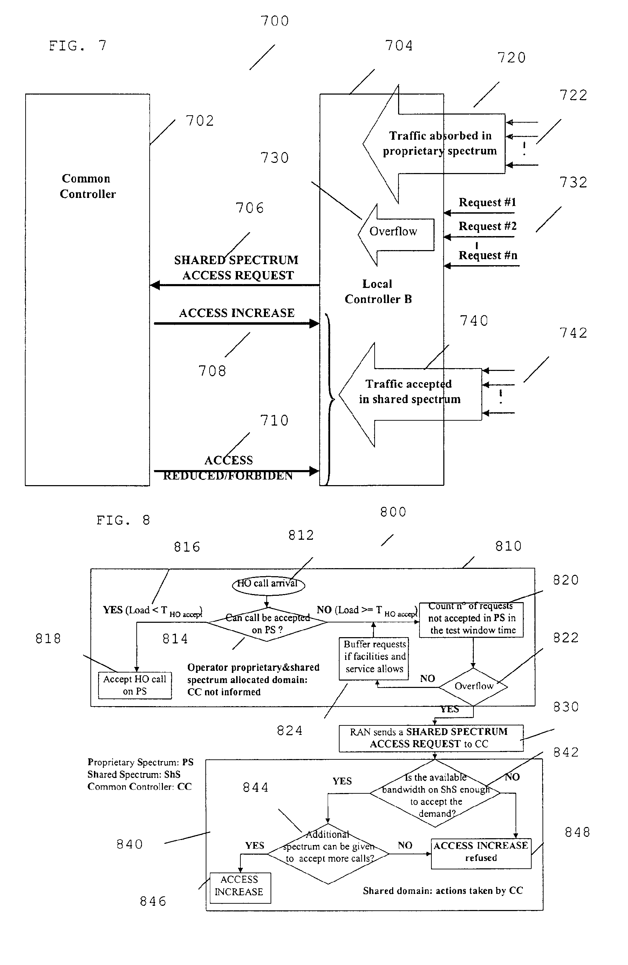

Referring now to FIG. 7, a method 700 of signalling exchange between a local controller (B, in this example when referring to Figure 6) 704 and a common controller 702 in inter-Operator spectrum sharing is shown, in accordance with a preferred embodiment of the invention.

Let us assume that the CC 702 receives a SHARED SPECTRUM ACCESS REQUEST message 706 from Operator B requesting additional spectra. The Operator B decides to send this message in overflow 730 situations. Estimation of the request access overflow 732 may be performed by a time window observation (number of requests arrived during the observation time that cannot be accommodated). The number of unsatisfied requests, that leads to sending a SHARED SPECTRUM ACCESS REQUEST 706 to the CC 702, is specific to the control policy used by each Operator.

It is noteworthy that, in order to allow the CC 702 to make a correct decision for the shared spectrum allocation, the SHARED SPECTRUM ACCESS MESSAGE 706 may contain an intensity factor, for example a "0" if an Operator needs less than has been pre-assigned and a "1" if an Operator needs more than has been pre-assigned.

This possible implementation assists a timely dynamic priority access change on the shared spectrum occupancy.

Another factor relevant to the CC 702, regarding the activity of a particular Operator, is the intensity of SHARED SPECTRUM ACCESS REQUEST messages 706 from this particular Operator (number of such requests per time window observation). This allows the CC 702 to build a history database for the activity of each Operator.

After analysing the access request, based on a current utilisation of the shared spectrum and other concurrent access requests, the CC 702 will send an ACCESS INCREASE message 708 to the local controller B 704, if bandwidth can be offered to the Operator B on the shared spectrum. It is within the contemplation of the invention that the ACCESS INCREASE message 708 will contain the set of target thresholds to be applied by the Operator. This is enough to inform Operator B that it is allowed to access the shared spectrum.

No more information between CC 702 and local controller 704 is required. During this time local controller B is allowed to send a number of traffic messages 742 on the shared spectrum 740. If the portion of shared spectrum, that has been granted to the Operator B, has to be reduced, the CC 702 sends an ACCESS REDUCED (eventually ACCESS FORBIDDEN) message 710 containing a new set of thresholds.

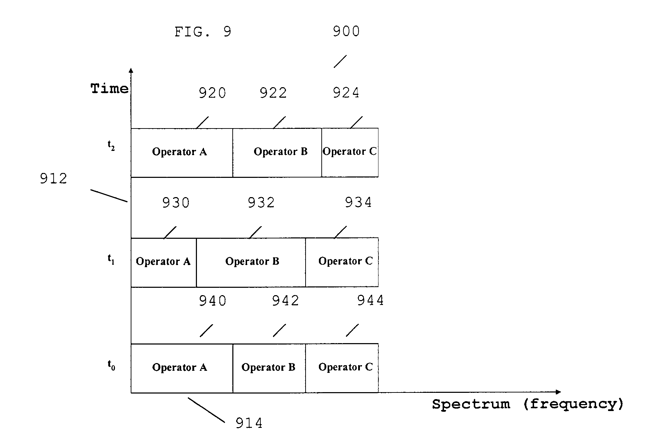

Referring now to FIG. 8, a flowchart 800 of a Call Admission process in dynamic inter-Operator spectrum sharing is shown, in accordance with a preferred embodiment of the invention. The example provided is for hand-over calls, but may be equally applied to new calls.

A hand-over call arrives, as shown in step 812, into an Operator proprietary and shared spectrum allocated domain 810. Shared spectrum is accessed only when the proprietary spectrum is saturated. Hence, a determination is made as to whether the call can be accepted by the proprietary system, as in step 814. The call can be accepted if the load impact involved in the handover is less than the T_{HO_accept} threshold 816, as shown in step 818.

If a determination is made that the call cannot be accepted by the proprietary system in step 814, the overflow situation is determined by the local controller, before sending a SHARED SPECTRUM ACCESS REQUEST message to the CC. The overflow situation is determined by counting the number of unsatisfied ACCESS REQUEST messages over the observation time, as shown in step 820. During this observation time the overflow situation is reviewed, as in step 822, and the ACCESS REQUEST messages may be queued if such facilities exist, and services might tolerate some waiting delay, as shown in step 824. Otherwise the ACCESS REQUEST messages are simply dropped.

If the overflow situation merits a shared service, in step 822, the local controller (e.g. located in Radio Access Network (RAN) of an Operator in a UMTS system operating both proprietary and shared frequencies) sends a SHARED SPECTRUM ACCESS REQUEST, as shown in step 830, to the shared domain. After receiving the SHARED SPECTRUM ACCESS REQUEST, calls that have been buffered waiting for resources are assessed to determine whether enough bandwidth is available, as shown in step 842.

If enough bandwidth is available, in step 842, a further determination is made to see if additional spectrum can be allocated to accept more calls, as shown in step 844. If additional spectrum can be allocated, the access threshold is increased, as in step 846. Otherwise, calls that have been queued have to be dropped, and an increase in shared spectrum access is refused, as shown in step 848. This may be achieved either by sending a specific message to the local controller or simply by timeout operations.

Referring now to FIG. 9, a graph 900, shows a plot of time 912 versus spectrum (frequency) allocation 914, of such a dynamic priority access in inter-Operator spectrum sharing, in accordance with a preferred embodiment of the invention. The example presents the status of shared spectrum at three different time instants, t₀, t₁, t₂, capturing different needs from co-existing Operators - A, B and C.

Priority levels may be revised over time. This makes it possible to automatically update the allocated threshold values according to current needs.

In the t₀ case, a pre-defined set of access priorities (to the shared spectrum) among multiple frequencies exist, and these priorities: Priority assigned to Operator A (P_{A}) > Priority assigned to Operator C (P_{C}) > Priority assigned to Operator B (P_{B}) (P_{A} > P_{C} > P_{B}) remains, irrespective of the needs of other Operators.

However, in the t₁ example case, if Operator B 932, having lower priority than Operator A 930, starts to be overloaded, for example by the arrival of a high bit-rate service, and where Operator A's resources are under-utilised, Operator B's access priority may be increased temporarily - P_{B} > P_{C} > P_{A}.

In the t₂ example: Operator A 920 starts to be overloaded, and Operator B 922 still needs more resources than those pre-assigned, while Operator C 924 has some capacity (since less loaded). Operator C 924 allocates some spectrum to Operator B and Operator A re-gains its entire pre-defined spectrum by removing the portion that has been granted to Operator B at step t₁, Finally, P_{A} > P_{B} > P_{C} remains.

Preferably, the central controller will arbitrate between concurrent needs of all Operators. In the preferred embodiment of the present invention, the central controller could be implemented either:
(i) to a single Operator, whereby the Operator hosts the controller, but it is not necessarily the master;
(ii) the Central Controller is duplicated and a copy of its information held by each Operator; or
(iii) an external Operator is used, namely an "Operator of Operators".

The Central controller has to be accessible by all interested Operators. The central controller and the Operators can communicate through wire-line or an over-the-air interface, when a "common channel" is needed.

It is within the contemplation of the invention that the Central controller may function as an operation and maintenance (OAM) machine. In cellular systems, the operation and maintenance (OAM) functions control the observation flow from machines as well as modifications of the configurations of the machines. This is typically the kind of functions the central controller would have to complete.

It is also within the contemplation of the invention that the invention is not limited to the re-distribution of frequencies, but may include any communication resource, such as time slots, time frames, codes etc.

It should be noted that the Global System for Mobile communications (GSM) standard provides for OAM functions to enable communication and exchange of information between different Operators. Such exchange of information is performed in the following cases:
(i) in the case of roaming users, the data exchanged between Operators consists of "toll tickets", containing some data about a specific call, such as the International Mobile Subscriber Identity (IMSI) of the user, the nature of the service, the duration, date and time of the call, etc.). These toll tickets can be exchanged between the Operators, or can be collected by a "clearing house" in charge of receiving all the agreed amounts to be transferred, and combining them so as to minimise the number of actual money transfers; or
(ii) in the domain of the mobile equipment management, the equipment identity register (EIR) can be implemented on two levels, either individual or common to several networks.

It will be understood that the communication system, communication unit and method of sharing a communication resource, as described above, provide at least the following advantages:
(i) makes the sharing of frequencies feasible by dynamically controlling a set of adjustable thresholds for call admission and termination, without the need of load information exchange between the Operators, resulting in better utilisation of the scarce spectrum;
(ii) provides flexible spectrum sharing and increase in spectrum efficiency;
(iii) use of default and target thresholds allows better distribution of the load between proprietary and shared frequencies with a focus towards the use of proprietary frequencies;
(iv) enables optimal load management policies and accurate control of interference by means of dynamically adjusting the above specified thresholds;
(v) the cost of the use of the shared frequency (spectrum) can be shared between the Operators; the proportion for each Operator being derived from the values of target threshold set; and
(vi) use of a Central controller adds more flexibility in the adjustment of resource available to each Operator.

Thus, a communication system and a method of sharing a communication resource have been provided wherein the aforementioned disadvantages associated with the prior art arrangements have been substantially alleviated.

## Claims

1. A wireless communication system, comprising a number of Operators providing communication on a communication resource, wherein the wireless communication system is **characterised by** a first portion of said communication resource being dedicated to a first Operator and a second portion of said communication resource being dedicated as a shared resource for shared use between at least two Operators in the wireless communication system.

2. The communication system according to claim 1, wherein the communication system is further **characterised by** the shared resource being shared based on at least one of the following principles:
(i) an algorithm enabling dynamic adjustment of resources available to each Operator;
(ii) said shared resource to be used only when the dedicated resource is fully loaded;
(iii) a priority arrangement exists between the at least two Operators sharing the shared communication resource and the shared resource is determined dynamically by a priority threshold value of the at least two Operators; or
(iv) exchange of load or confidential or sensitive information between Operators concerning each Operator to be avoided.

3. The communication system according to claim 2, wherein, for at least principle (iii), the communication system is further **characterised by** use of a set of thresholds in order to manage a communication load or a number of communication users communicating on the communication resource.

4. The communication system according to claim 3, wherein the set of thresholds includes at least one of the following:
T_{admission}: a new call admission threshold;
T_{HO accept}: hand-over requests admission threshold;
T_{HOdepart}: a hand-over departure threshold; and
T_{drop}: a drop threshold, for disconnecting communication users from the communication resource.

5. The communication system according to claim 4, wherein dynamic threshold adjustment is performed by the at least two Operators based on limits defined by at least one of: a default set of threshold(s) or a target set of threshold(s).

6. The communication system according to claim 5, wherein the default set of threshold(s) and/or target set of threshold(s) are pre-defined or changed dynamically.

7. The communication system according to claim 5 or claim 6, wherein at least in the case of principle (iii) for a shared communication resource, the:
(i) default set of threshold(s) refers to value(s) of threshold(s) used to prevent use of the shared communication resource; and
(ii) target set of threshold(s) refers to value(s) of threshold(s) when a shared communication resource is used.

8. The communication system according to any of claims 5 to 7, wherein dynamic threshold adjustment is performed to favour loading of a dedicated communication resource before loading of a shared communication resource.

9. The communication system according to any of claims 5 to 7, wherein dynamic threshold adjustment is performed to favour the use of shared communication resource.

10. The communication system according to any of claims 5 to 9, wherein, the communication system is further **characterised by** priority rules and/or cost distribution being shared between the at least two Operators derived from the at least one of: a default threshold, a target threshold.

11. The communication system according to claim 10, wherein Operator priorities are modifiable such that threshold values are dynamically adjusted according to communication system needs.

12. The communication system according to claim 2, wherein, at least for principle (iv), the communication system is further **characterised by** a controller exchanging information between at least two Operators regarding availability of frequencies for sharing.

13. The communication system according to claim 12, wherein the controller notifies the availability of a communication resource for sharing to at least one Operator.

14. The communication system according to claim 12 or claim 13, wherein the controller is operably coupled to the at least two Operators to adjust dynamically the threshold set via a wire-line or an over-the-air interface.

15. The communication system according to any of claims 12 to 14, wherein the controller performs an operation and management function for the communication system.

16. The communication system according to any of claims 12 to 15, wherein at least one of the following conditions exists:
(i) a single Operator hosts the controller;
(ii) a copy of controller threshold(s) and algorithm(s) regarding updating of said shared communication resource is maintained by each Operator; or
(iii) an Operator external to the communication system hosts the controller.

17. The communication system according to any of claims 12 to 16, wherein one of the at least Operators sends a SHARED SPECTRUM ACCESS REQUEST to the controller when the Operator requires additional communication resource.

18. The communication system according to claim 17, wherein an estimation of the shared spectrum access request overflow is performed using time window observation.

19. The communication system according to claim 17 or claim 18, wherein the SHARED SPECTRUM ACCESS REQUEST includes an intensity factor so that the controller may determine allocation of the shared spectrum.

20. A method of sharing a communication resource in a wireless communication system, the wireless communication system comprising a number of Operators providing communication on the communication resource, the method comprising the step of:
operating a dedicated first portion of said communication resource by a first Operator; the method **characterised by** the step of:
operating a second portion of said communication resource as a shared resource for shared use between at least two Operators within said wireless communication system.

21. The method of sharing a communication resource according to claim 20, wherein the method is further **characterised by** the shared communication resource being shared based on at least one of the following principle steps:
(i) enabling a dynamic adjustment of communication resources available to each of the at least two Operators;
(ii) sharing said shared communication resource only when said dedicated first portion of said communication resource is fully loaded;
(iii) determining dynamically the shared communication resource between the at least two Operators based on a priority threshold value assigned to the at least two Operators; or
(iv) exchanging between the at least two Operators load or confidential or sensitive information concerning each Operator should be avoided.

22. The method of sharing a communication resource according to claim 21, the method further **characterised by** the step of:
managing a communication load or a number of communication users communicating on the communication resource, based on a set of threshold values.

23. The method of sharing a communication resource according to claim 22, wherein the set of threshold values includes at least one of the following:
T_{admission}: a new call admission threshold;
T_{HO accept}: hand-over requests admission threshold;
T_{HOdepart}: a hand-over departure threshold; and
T_{drop}: a drop threshold, for disconnecting communication users from the communication resource.

24. The method of sharing a communication resource according to claim 23, further **characterised by** the step of:
performing a dynamic threshold adjustment by the at least two Operators based on limits defined by at least one of a default set of threshold(s) or a target set of threshold(s).

25. The method of sharing a communication resource according to claim 24, wherein the default set of threshold(s) and/or target set of threshold(s).are pre-defined or changed dynamically.

26. The method of sharing a communication resource according to claim 24 or claim 25, wherein at least in the case of principle (iii) for a shared communication resource, the:
(i) default set of threshold(s) refer to value(s) of threshold(s) used to prevent use of the shared communication resource; and
(ii) target set of threshold(s) refer to value(s) of threshold(s) when a shared communication resource is used.

27. The method of sharing a communication resource according to any of claims 24 to 26, further **characterised by** the step of:
performing dynamic threshold adjustment to favour loading of a dedicated communication resource before loading of a shared communication resource.

28. The method of sharing a communication resource according to any of claims 24 to 26, further **characterised by** the step of:
performing dynamic threshold adjustment to favour use of a shared communication resource.

29. The method of sharing a communication resource according to any of claims 24 to 28, the method further **characterised by** the step of:
sharing priority rules and/or cost distribution between the at least two Operators derived from at least one of: default set of threshold(s), target set of threshold(s).

30. The method of sharing a communication resource according to claim 29, further **characterised by** the step of:
modifying Operator priorities such that at least one set of threshold value(s) are dynamically adjusted according to communication system needs.

31. The method of sharing a communication resource according to claim 21, the method further **characterised by** the step of:
exchanging information between Operators regarding availability of frequencies for sharing.

32. The method of sharing a communication resource according to claim 31, the method further **characterised by** the step of:
notifying an availability of a shared communication resource to the at least two Operators.

33. The method of sharing a communication resource according to any of claims 19 to 32, further **characterised by** the step of:
transmitting, by one of the at least two Operators a SHARED SPECTRUM ACCESS REQUEST to a Controller in the communication system when the Operator requires additional communication resource.

34. The method of sharing a communication resource according to claim 33, further **characterised by** the step of:
performing an estimation of a shared spectrum access request overflow using a time window observation.

35. The method of sharing a communication resource according to claim 33 or claim 34, further **characterised by** the step of:
determining an allocation of the shared spectrum based on an intensity factor.
